# EUROPEAN PATENT APPLICATION

(11) **EP 0 707 802 A1**
(43) Date of publication of application: **24.04.1996**
(21) Application number: 94307604.2
(22) Date of filing: 17.10.1994
(51) Int. Cl.: A41D 31/02, B32B 27/12

(54) **Improvements in or relating to garments**

(71) Applicant: Multifabs Limited, Derby DE3 8LF (GB)
(72) Inventor: Hutchins, Alan James, c/o Multifabs Limited, Derby DE3 8LF (GB)
(74) Representative: Campbell, Iain Angus

(57) **Abstract**

A garment for wear within a immersion suit or any other garment is formed from a material which comprises a central wadding (30) consisting of lofted fibres and on either side of the wadding a surface fabric (32) of cotton (34) coated on its side adjacent to the wadding with a stretchable, breathable membrane (36).

## Description

The present invention concerns improvements in or relating to garments, especially but not exclusively thermally insulating garments intended to be worn within an outer garment.

The present invention relates particularly but not exclusively to inner garments for wearing below a survival or immersion suit. Such suits are waterproof garments intended to protect the wearer against hypothermia when he finds himself in the sea, for example, following the ditching of a helicopter.

The design of immersion suits has advanced very rapidly in recent years from a garment which was originally cumbersome, difficult to put on and not especially efficient to a relatively comfortable lightweight garment having a relatively high operating efficiency.

Sea temperatures, particularly in northern and southern latitudes, are never high so that there always exists a danger from hypothermia to a person in the sea, irrespective of the efficiency of waterproofing of the immersion suit. There is a requirement to contain the drop in body core temperature to less than 2°C after a minimum of three hours immersion in cold water at a temperature of around 5°C. The proposal to insulate the wearer by cladding him in thermal wadding has never been contemplated because as soon as the wadding becomes wet, either as a result of ingress of sea water into the suit or as a result of absorption of perspiration from the wearer (for example before he is immersed in the sea), the moist or wet thermal wadding accelerates the drop in body core temperate rather than decelerate it.

The present invention surprisingly employs thermal wadding to provide insulation from cold surroundings for the wearer.

According to the present invention there is provided a garment, adapted for wear within an outer garment, formed from a material which comprises a central thermal wadding faced on either side with a surface fabric which in turn is coated on its side adjacent the thermal wadding with a stretchable, breathable membrane.

Preferably the membrane is a layer of polytetrafluoroethylene, polytetrafluoroethylene/polyurethane, polyurethane or other similar material which is capable of transmitting water vapour. These membranes may be either hydrophillic or microporous. Preferably the fabric is 100% cotton. Alternatively the fabric is formed from a suitable synthetic fibre.

Preferably the thermal wadding comprises a felt-like structure of lofted fibres. Preferably the density of the lofted fibres is between 50 g/m² and 200 g/m². The fibres may be polyester or any other suitable fibre.

The garment may be provided with fastening means, for example a sliding clasp fastener or a fleece and hook fastener, down the front of its torso portion. In addition to the torso portion the garment preferably includes leg and arm portions.

An embodiment of the present invention will now be described by way of example only with reference to the accompanying drawings, in which:
Fig. 1 shows diagrammatically an inner suit for wearing within an immersion suit; and
Fig. 2 shows a cross-section through the material from which the inner suit is manufactured.

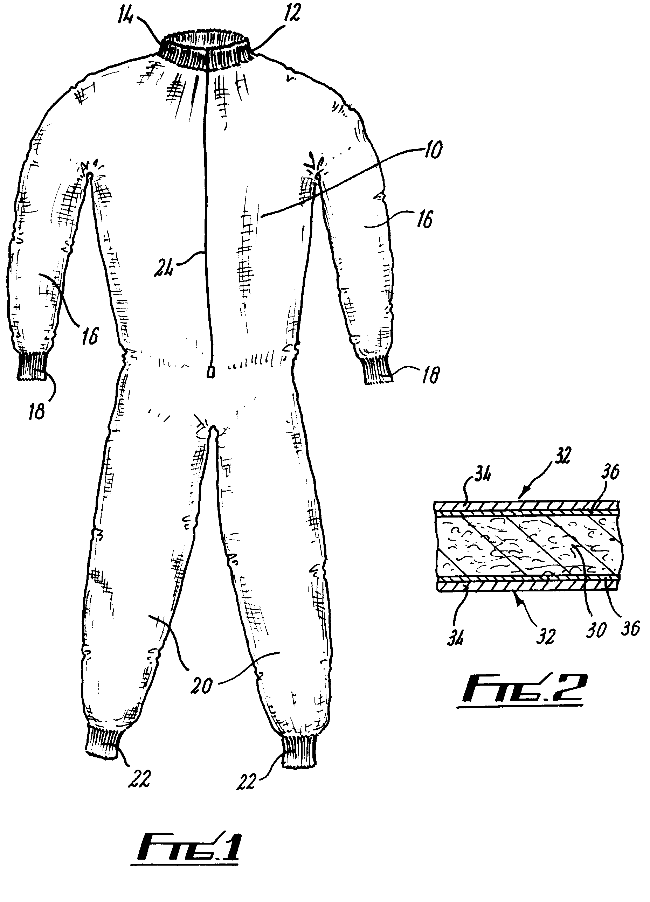

An inner suit for wearing within an immersion suit, as illustrated in Fig. 1, comprises a torso 10 having a crew neck 12 adapted to fit snugly around the wearer's neck including, if necessary, elastication 14, a pair of arms 16 with elasticated cuffs 18 intended, in use, to be positioned just above the wearer's wrists and a pair of legs 20 each with elasticated cuffs 22 extending downwardly from the torso portion. A front fastening 24 to assist in donning and doffing the garment is provided in the torso portion. The front fastening 24 may be a sliding clasp fastener, a fleece and hook fastener, buttons or any other suitable fastening arrangement although a sliding clasp fastener is preferable.

The material from which the garment is made is of particular importance to the invention and, surprisingly in the circumstances, comprises a thermal wadding 30 consisting of lofted fibres of density between 100 g/m² and 200 g/m². The fibres are conveniently chosen from any one of a variety of suitable thermally insulating materials such as polyester, for example THINSULATE (Registered Trade Mark). The wadding is located between two outer layers 32 of a composite fabric comprising a layer 34 of 100% cotton, which may be knitted or woven, to which is affixed a membrane 36 of a stretchable, breathable material, for example, PTFE. Suitable materials could be PORELLE or GORETEX (both Registered Trade Marks).

It is important that the outer and inner fabric layers are continuous and waterproof. Thus, in the manufacture of the garment any seams are made up in such a way that they are waterproof. Additionally, it is important that the outer layers are held against the wadding in a waterproof manner. It is not suitable for a quilting technique to be employed as the stitching would destroy the waterproof nature of the outer fabric layers.

It will be realised that as a result of the waterproof nature of the outer fabric layers, no water will be absorbed by the thermal wadding so that its thermal insulating properties will not be in any way reduced by, for example, the wearer's perspiration or, on immersion, by water introduced into the immersion suit.

It is particularly important that an inner garment of this nature is comfortable to wear in normal circumstances, that is when the wearer is not immersed in water. Thus, the breathable qualities of the fabric with which the wadding of the inner suit is lined are of significant importance. Tests carried out at 21°C have already shown that there is no significant alteration in body comfort when the garment is worn within an immersion suit as compared with when the suit is worn without the garment.

Various modifications can be made without departing from the scope of the invention, for example, the overall design of the garment can be varied in accordance with circumstances. It could, for example, have fastening cuffs and elastication at its waist or any other portions which would increase its comfort and ease of donning and doffing for the wearer or have attached foot and hand protection.

The material employed to make up the garment could vary. Different thermal wadding could be employed within different outer fabric layers, for example, outer layers of a suitable synthetic material but it is essential in every instance that the garment is in itself waterproof while at the same time breathable.

## Claims

1. A garment, adapted for wear within an outer garment, is characterised in that it is formed from a material which comprises a central thermal wadding (30) faced on either side with a surface fabric (34) which is coated on its side adjacent the thermal wadding (30) with a stretchable, breathable membrane (36).

2. A garment as claimed in claim 1, characterised in that the membrane (36) is a layer of polytetrafluoroethylene, polytetrafluoroethylene/polyurethane, polyurethane, or other similar material and is capable of transmitting water vapour.

3. A garment as claimed in claim 2, characterised in that the membrane (36) is hydrophillic.

4. A garment as claimed in claim 2, characterised in that the membrane (36) is microporous.

5. A garment as claimed in any one of the preceding claims, characterised in that the fabric (31) is 100% cotton, or 100% synthetic fibre or a mixture of synthetic fibre and cotton.

6. A garment as claimed in any one of the preceding claims, characterised in that the thermal wadding (30) comprises a felt-like structure of lofted fibres.

7. A garment as claimed in claim 6, characterised in that the density of the lofted fibres is between 50 g/m² and 200 g/m².

8. A garment as claimed in claim 6 and claim 7, characterised in that the fibres are polyester or any other suitable fibre.

9. A garment as claimed in any one of the preceding claims, characterised in that it is provided with front fastening means (24), for example a sliding clasp fastener or a fleece and hook fastener, down the front of its torso portion (10).

10. A garment as claimed in Claim 9, characterised in that in addition to the torso portion the garment includes leg and arm portions (20,16).
